# EUROPÄISCHE PATENTSCHRIFT

(11) **EP 3 070 723 B1**
(45) Veröffentlichungstag und Bekanntmachung des Hinweises auf die Patenterteilung: **19.07.2017**
(21) Anmeldenummer: 16159897.4
(22) Anmeldetag: 11.03.2016
(51) Int. Cl.: H01F 27/00

(54) **VORRICHTUNG ZUR ÜBERTRAGUNG VON DATEN UND ENERGIE ZWISCHEN ZWEI SICH RELATIV ZUEINANDER BEWEGENDEN GEGENSTÄNDEN**
DEVICE FOR THE TRANSMISSION OF DATA AND ENERGY BETWEEN TWO OBJECTS MOVING RELATIVE TO ONE ANOTHER
DISPOSITIF DE TRANSMISSION DE DONNEES ET D'ENERGIE ENTRE DEUX OBJETS SE DEPLAÇANT L'UN PAR RAPPORT A L'AUTRE

(30) Priorität: 16.03.2015 DE 102015103823
(43) Veröffentlichungstag der Anmeldung: 21.09.2016
(73) Patentinhaber: SICK AG, 79183 Waldkirch/Breisgau (DE)
(72) Erfinder: Schmitz, Stephan, 79108 Freiburg (DE); Kufner, Martin, 79215 Elzach (DE); Kerp, Michael, 79183 Waldkirch (DE); Szerbakowski, Boris, 79183 Waldkirch (DE); Huber, Gregor, 79110 Freiburg (DE)
(74) Vertreter: Manitz Finsterwald Patentanwälte PartmbB

(56) Entgegenhaltungen:
- WO-A1-2009/033573
- DE-B3-102014 105 261

## Beschreibung

Die Erfindung betrifft eine Vorrichtung zur kontaktlosen Übertragung von Daten und Energie zwischen zwei sich um eine gemeinsame Rotationsachse relativ zueinander bewegenden Gegenständen, wobei der erste Gegenstand eine erste Spule umfasst und der zweite Gegenstand eine zweite Spule umfasst, wobei sich die Spulen derart bezüglich der Rotationsachse axial beabstandet gegenüberstehen, dass eine Energieübertragung durch induktive Kopplung zwischen den zwei Spulen möglich ist. Die Erfindung betrifft weiterhin einen Laserscanner mit einer solchen Vorrichtung.

Bei sich relativ zueinander drehenden Gegenständen ist es oftmals notwendig, dass Energie und Daten zwischen den zwei sich relativ zueinander bewegenden Gegenständen übertragen werden. Zum Beispiel ist es bei heutigen Anwendungen oftmals notwendig, dass Energie und Datensignale zwischen einer in einem Kraftfahrzeug feststehenden Lenksäule und dem Lenkrad übertragen werden. So ist es z.B. notwendig, Energie an das Lenkrad zu übertragen, um die Zündung eines darin montierten Airbags auslösen zu können. Andererseits müssen Datensignale, z.B. nach dem Drücken der Hupe, übertragen werden, damit die entsprechend angeforderte Aktion im Kraftfahrzeug durchgeführt wird.

Eine andere Anwendung findet sich z.B. bei entsprechenden Ausgestaltungen von Laserscannern zur Überwachung einer Umgebung. Energie und Datensignale werden hier z.B. zwischen einem sich drehenden Sensorkopf und einer feststehenden Auswerte- und Versorgungseinheit ausgetauscht.

DE 195 32 043 A1 beschreibt ein Lenkrad für ein Fahrzeug, bei dem zwischen der Lenksäule und dem sich relativ dazu drehenden Lenkrad Energie über eine induktive Kopplung entsprechender Spulensysteme gewährleistet wird. Für die Signalübertragung sieht die DE 195 32 043 A1 die Übertragung auf induktiver Basis oder auf opto-elektrischer Basis vor.

Die opto-elektrische Übertragung gemäß DE 195 32 043 A1 erfordert zusätzliche optische Elemente. Die möglichen Datenraten bei einer induktiven Übermittlung von Daten sind andererseits in der Höhe sehr begrenzt. So sind in der Regel maximal mehrere 10 kbit möglich, was für viele Anwendungen nicht ausreichend ist.

DE 44 07 277 A1 beschreibt einen Übertrager für Energie zwischen zwei sich relativ zueinander drehenden Elementen. Vorgesehen sind dazu zwei Spulenträger in Form von gedruckten Leiterplatten, auf denen jeweils im Wesentlichen konzentrisch zu der Drehachse der Relativbewegung Spulenwindungen vorgesehen sind, die zur Übertragung von Energie über eine induktive Kopplung zwischen den beiden sich relativ zueinander bewegenden Gegenständen dienen. Die Spulen werden von Ferritkernen durchsetzt, die die magnetische Kopplung bewirken bzw. fördern. Diese Anordnung wird gemäß DE 44 07 277 A1 auch zur Informationsübertragung verwendet.

DE 41 20 650 A1 beschreibt die Energie- und Datenübertragung zwischen Lenksäule und Lenkrad eines Kraftfahrzeugs. Eine induktive Kopplung wird über zwei sich gegenüberstehende Spulen bewirkt, mit der die Energie zwischen den zwei sich relativ zueinander bewegenden Gegenständen übertragen werden kann. Die Spulenwicklungen haben dabei in axialer Richtung etwa die gleiche Ausdehnung wie in radialer Richtung. Radial oder axial von den Spulen entfernt befinden sich an den sich relativ zueinander drehenden Gegenständen Kondensatorelektroden, die zur Übertragung von Daten verwendet werden.

DE 10 2014 105 261 B3 beschreibt eine Vorrichtung zur Übertragung von Daten und Energie zwischen zwei sich gegeneinander drehenden Objekten. Auf zwei sich gegeneinander drehenden Leiterplatten sind Spulenwicklungen vorgesehen, mit deren Hilfe Energie induktiv übertragen wird. Eine Datenübertragung geschieht über Elektroden, die ebenfalls auf der Leiterplatte und konzentrisch zu den Spulenwicklungen vorgesehen sind. DE 10 2014 105 261 B3 beschreibt eine Vorrichtung mit den Merkmalen des Oberbegriffes des Anspruchs 1.

Es ist die Aufgabe der vorliegenden Erfindung, eine Vorrichtung anzugeben, mit der sowohl die Energie- als auch die Datenübertragung zwischen zwei sich relativ zueinander um eine Rotationsachse bewegenden Gegenständen kontaktlos auf einfache, effektive, kompakte und störunanfällige Art und Weise bewirkt werden kann, so dass die Vorrichtung auch eingesetzt werden kann, wenn nur wenig Bauraum zur Verfügung steht.

Diese Aufgabe wird mit einer Vorrichtung zur kontaktlosen Übertragung von Daten und Energie mit den Merkmalen des Anspruchs 1 gelöst. Unteransprüche sind auf bevorzugte Ausgestaltungen gerichtet. Ein Laserscanner mit einer erfindungsgemäßen Vorrichtung zur Übertragung von Daten und Energie ist Gegenstand des Anspruches 11.

Die erfindungsgemäße Vorrichtung zur Übertragung von Daten und Energie zwischen zwei sich um eine gemeinsame Rotationsachse relativ zueinander bewegenden Gegenständen weist eine erste Spule an dem ersten Gegenstand und eine zweite Spule an dem zweiten Gegenstand auf. Die zweite Spule steht der ersten Spule derart bezüglich der Rotationsachse axial beabstandet gegenüber, dass eine kontaktlose Energieübertragung durch induktive Kopplung zwischen den zwei Spulen möglich ist.

Koaxial zu und drehfest mit der ersten Spule ist ein erster scheiben- oder ringscheibenförmiger Elektrodenträger mit einem ersten elektrischen Leiter vorgesehen. Koaxial zu und drehfest mit der zweiten Spule ist ein dem ersten Elektrodenträger gegenüberstehender zweiter scheiben- oder ringscheibenförmiger Elektrodenträger mit einem zweiten elektrischen Leiter vorgesehen. Die Elektrodenträger stehen derart axial beabstandet gegenüber und der erste und der zweite elektrische Leiter sind derart angeordnet, dass eine Datenübertragung durch kontaktlose elektrische Kopplung zwischen dem ersten und dem zweiten elektrischen Leiter möglich ist.

Der Begriff der "elektrischen Kopplung" zwischen dem ersten und dem zweiten elektrischen Leiter ist hier also als kontaktlose kapazitive Kopplung zu verstehen.

Die Spule bzw. die Spulen sind konzentrisch zu der Drehachse der Relativbewegung der Gegenstände, wodurch die erfindungsgemäße Anordnung einfach und leicht zu handhaben ist. Die elektrischen Leiter zur Datenübertragung sind kreisförmig oder teilkreisförmig ausgestaltet, wobei die Kreise oder Teilkreise konzentrisch zur Drehachse der Relativbewegung sind.

Der erste Gegenstand umfasst einen ersten scheiben- oder ringscheibenförmigen Spulenträger, der die erste Spule trägt, und der zweite Gegenstand umfasst einen zweiten scheiben- oder ringscheibenförmigen Spulenträger, der die zweite Spule trägt. Derartige scheiben- oder ringscheibenförmige Spulenträger sind einfach herzustellen und können z.B. durch lithographische Prozesse prozessiert werden, um die Spulen darauf aufzubringen.

Außerdem sind nicht nur die Elektrodenträger scheiben- oder ringscheibenförmig ausgestaltet und stehen sich zur Datenübertragung axial beabstandet gegenüber, sondern auch die Spulen auf dem scheiben- oder ringscheibenförmig ausgestalteten Spulenträger stehen sich axial beabstandet gegenüber, um die induktive Kopplung zur Energieübertragung zu ermöglichen. Auf diese Weise ist ein sehr kompakter und einfacher Aufbau gewährleistet. Besonders einfach und vorteilhaft ist dabei, dass die Spulenträger bei der Erfindung direkt als Leiterkarten ausgestaltet sind, auf denen die jeweiligen Spulenwindungen zur Energieübertragung aufgebracht sind. Ebenso umfassen die Elektrodenträger Leiterkarten, auf die die elektrischen Leiter zur Datenübertragung aufgebracht sind. Die metallischen Spulenwindungen zur Energieübertragung bzw. die elektrischen Leiter zur Datenübertragung lassen sich auf Leiterkarten sehr einfach durch an sich bekannte lithographische Prozesse (z.B. Aufdampfen oder Ätzen) herstellen.

Auf diese Weise ist die Geometrie der Spulenwindungen bzw. der elektrischen Leiter auf einfache Weise festlegbar und die Leiterkarten können selbst als Träger für die Spulenwindungen bzw. die elektrischen Leiter dienen. Besonders einfach und in der Herstellung kostengünstig ist es, dass bei der Erfindung am ersten Gegenstand der erste Spulenträger und der erste Elektrodenträger einstückig vorgesehen sind (also durch ein Teil gebildet werden kann) und am zweiten Gegenstand der zweite Spulenträger und der zweite Elektrodenträger einstückig sind. Auf diese Weise muss jeweils nur eine Leiterkarte pro Gegenstand vorgesehen sein. Auf dieser Leiterkarte sind dann jeweils die Spule zur Energieübertragung und der elektrische Leiter zur Datenübertragung vorgesehen und können bei der Herstellung z.B. gleichzeitig prozessiert werden.

Dadurch, dass die Spulenträger bzw. die Elektrodenträger als Leiterkarten vorgesehen sind, ist es auf platzsparende Weise möglich, weitere - insbesondere elektronische - Komponenten und Verbindungsleitungen vorzusehen.

Vorteilhafterweise sind die Spulen flächig ausgestaltet. Das heißt, sie umfassen Spulenwindungen, die auf einer Fläche des jeweiligen scheiben- oder ringscheibenförmigen Spulenträgers nebeneinander angeordnet sind. Grundsätzlich ist es möglich, dass auf der zweiten Fläche des jeweiligen Spulenträgers jeweils eine weitere flächige Spule vorgesehen ist, die die induktive Kopplung z.B. über eine Ferritstruktur verstärkt.

Bevorzugt ist es jedoch, wenn sich die Spulenwindungen der ersten Spule (am ersten Gegenstand) und die Spulenwindungen der zweiten Spule (am zweiten Gegenstand) auf den gegenüberliegenden Seiten der beiden Spulenträger gegenüber stehen, wie es auch weiter unten unter Bezug auf die in den Figuren gezeigte Ausgestaltung beschrieben ist.

Bei der erfindungsgemäßen Vorrichtung ist zudem zwischen der ersten Spule und dem ersten elektrischen Leiter und/oder zwischen der zweiten Spule und dem zweiten elektrischen Leiter, jeweils koaxial zwischen Spule und Leiter, eine Anordnung aus leitfähigen Material zur elektrischen Abschirmung vorgesehen. Es ist damit auf effektive Weise möglich, trotz der kompakten Anordnung der Vorrichtung Störungen der Datenübertragung über die elektrischen Leiter durch die benachbart angeordnete induktive Energieübertragung über die Spulen wirksam einzuschränken. Trotzdem ist eine kleine Bauform möglich, weil die induktive Energieübertragung und die elektrische Datenübertragung räumlich nicht weit auseinander liegen müssen, um die ansonsten stattfindende elektromagnetische Störung zu verhindern.

Bei der Erfindung ist zur Abschirmung zwischen den energieübertragenden Spulen und den datenübertragenden Elektroden vorgesehen, dass zwischen den Spulenwindungen und dem elektrischen Leiter Bohrungen in der jeweiligen Leiterkarte vorgesehen sind, in denen sich leitfähiges Material befindet. Eine solche Abschirmung ist besonders einfach zu realisieren.

Besonders bevorzugt kann dazu vorgesehen sein, dass die Innenumfänge der Bohrungen in den Leiterkarten mit metallischem Material beschichtet sind, um eine Abschirmung zu bewirken, die auf einfache Weise realisiert werden kann, ohne die Trägerstruktur zu sehr zu schwächen.

Besonders vorteilhaft ist es, wenn die Vorrichtung eine erste Gehäuseschale aus leitfähigem Material und/oder eine zweite Gehäuseschale aus leitfähigem Material aufweist, wobei die erste Gehäuseschale drehfest mit dem ersten Gegenstand ist und die zweite Gehäuseschale drehfest mit dem zweiten Gegenstand. Die Gehäuseschalen aus leitfähigem Material dienen zur elektrischen Abschirmung des Systems nach außen und verhindern auf wirksame Weise Störungen durch externe Einflüsse.

Außerdem bieten derartig angeordnete und ausgestaltete Gehäuseschalen eine Verbindung zur virtuellen Masse, indem sie eine kapazitive Kopplung zwischen der realen Masse und der virtuellen Masse bewirken.

Besonders vorteilhaft ist es, wenn die erste Gehäuseschale dabei elektrisch mit der elektrischen Anordnung zwischen den Spulenwindungen der ersten Spule und dem ersten elektrischen Leiter verbunden ist und die zweite Gehäuseschale elektrisch mit der elektrischen Anordnung aus leitfähigem Material zur elektrischen Abschirmung zwischen den Spulenwindungen der zweiten Spule und dem zweiten elektrischen Leiter verbunden ist.

Auf diese Weise sind die Abschirmungsanordnungen zwischen den jeweiligen Spulenwindungen und Elektroden elektrisch mit jeweils einer Gehäuseschale verbunden, so dass eine wirksame Abschirmung der Datenübertragung gegenüber jeglichen äußeren Einflüssen und insbesondere auch gegenüber den Einflüssen der zur Energieübertragung verwendeten Spulen vorgesehen ist. Nur diejenige Seite des Elektrodenträgers, die dem Elektrodenträger auf dem anderen sich relativ drehenden Gegenstand direkt gegenübersteht, ist nicht von der Abschirmung umgeben.

Die Verbindung kann zum Beispiel durch eine leitfähige ringförmige Struktur, z.B. leitfähigem Schaumstoff gebildet sein, der koaxial zur Drehachse zwischen Spule und Elektrode angeordnet ist.

Besonders wirksam ist die Abschirmung durch die Gehäuseschalen, wenn die beide Gehäuseschalen an ihrem radial äußeren Bereich jeweils einen abgewinkelten Bereich umfassen, wobei die abgewinkelten Bereiche der beiden Gehäuseschalen radial beabstandet zueinander nebeneinander stehen. Je größer der überlappende Bereich der Abschirmung (insbesondere der Gehäuseschalen) ist und desto geringer der Abstand der überlappenden Bereiche ist, umso besser ist die abschirmende Wirkung.

Vorteilhafterweise umgibt denjenigen Bereich des jeweiligen Spulenträgers, auf dem sich die jeweilige Spule befindet, zumindest an seinem radial äußeren Umfang eine Anordnung aus magnetischem Material und/oder ist in seinem radial Inneren angeordnet. Weisen die Spulenträger jedes der sich relativ zueinander bewegenden Gegenstände eine entsprechende Anordnung aus magnetischem Material auf, so wird durch die transformatorische Wirkung die induktive Kopplung zur Energieübertragung wirksam verstärkt.

Außerdem kann eine entsprechende Anordnung aus magnetischem Material, die den Bereich der Spulenträger umgibt, eine weitere abschirmende Wirkung aufweisen, die verhindert, dass die induktive Energieübertragung die elektrische Datenübertragung negativ beeinflusst.

In besonders vorteilhafter Weise wird diese magnetische Anordnung aus weichmagnetischen Materialien, insbesondere "Ferrit" hergestellt.

Besonders wirkungsvoll und effektiv wirkt die Anordnung aus magnetischem Material an dem jeweiligen Gegenstand, wenn sie einen zur Drehachse der Relativbewegung der Gegenstände konzentrischen kreis- oder teilkreisförmigen Abschnitt aufweist, der die Leiterkarte durchsetzt, und/oder einen zweiten zur Drehachse der Relativbewegung der Gegenstände konzentrischen kreis- oder teilkreisförmigen Abschnitt aufweist, der die Leiterkarte durchsetzt und einen größeren Radius hat als der erste Abschnitt.

Es ist damit möglich, eine konzentrisch zur Drehachse der Relativbewegung der Gegenstände angeordnete Spule auf der Leiterkarte in Umfangsrichtung mit der magnetischen Anordnung zu umschließen. Auf diese Weise wird die induktive Kopplung durch die Spulen intensiviert und andererseits die Abschirmung verbessert.

Es kann vorgesehen sein, dass ein Antriebsmotor zur Erzeugung der Relativbewegung der zwei Gegenstände oder die Antriebswelle eines entsprechenden Antriebsmotors die Leiterkarten durchsetzt, um einen möglichst kompakten Aufbau zu gewährleisten.

Eine um die Rotationsachse der Relativbewegung im Wesentlichen rotationssymmetrische Anordnung und Ausgestaltung der einzelnen Elemente der erfindungsgemäßen Vorrichtung und ihrer bevorzugten Ausgestaltungen ist wegen der einfachen Herstellung, der einfachen Handhabung und des einfachen Betriebes vorteilhaft.

Außerdem ermöglicht die erfindungsgemäße Vorrichtung und ihre besonders bevorzugten Ausgestaltungen auf Grund der guten Abschirmung insbesondere zwischen den datenübertragenden Elektroden und den energieübertragenden Spulen, die Datenübertragung im einstelligen 100 MHz Bereich bei Datenraten von etwa 30 Mbit, wodurch ein kostengünstigerer und stromsparenderer Betrieb möglich ist, als wenn eine Datenübertragung im GHz-Bereich vorgesehen ist.

Besonders vorteilhaft ist die erfindungsgemäße Vorrichtung zur Übertragung von Energie und Daten bei Laserscannern einsetzbar, bei denen sich ein Sensorkopf relativ zu einer Versorgungseinheit dreht. Hier ist insbesondere die kompakte Bauform und dennoch präzise Datenübertragung vorteilhaft, die durch die erfindungsgemäße Vorrichtung zur Übertragung von Energie und Daten und deren vorteilhaften Ausgestaltungen erreicht werden kann.

Bevorzugte Ausführungsformen ergeben sich aus den Unteransprüchen, den beiliegenden Figuren und/oder der im Folgenden beschriebenen Ausführungsbeispiele.

Die Erfindung wird anhand der beiliegenden Figuren im Detail beschrieben, die eine Ausführungsform zeigen. Dabei zeigen:
- Fig. 1: eine Ausführungsform einer erfindungsgemäßen Vorrichtung in schematischer Darstellung im seitlichen Schnitt,
- Fig. 2: eine leicht perspektivische Draufsicht auf eine Leiterkarte zum Einsatz bei einer Ausführungsform der erfindungsgemäßen Vorrichtung,
- Fig. 3: eine Ferritanordnung zum Einsatz in einer erfindungsgemäßen Anordnung der Fig. 1 oder 2, und
- Fig. 4: eine Darstellung, bei der die Ferritanordnung der Fig. 3 und die Leiterkarte der Fig. 2 zusammengebaut sind.

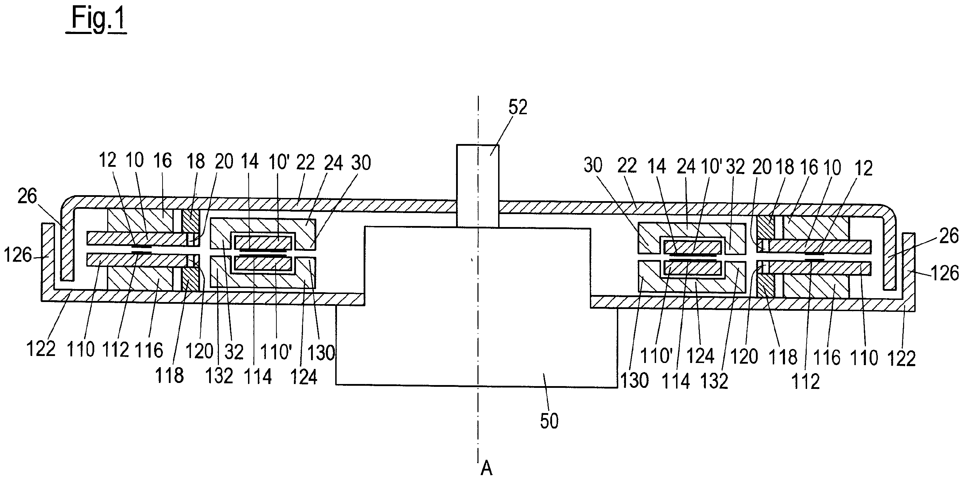

Fig. 1 zeigt eine Ausgestaltung einer erfindungsgemäßen Vorrichtung im seitlichen Schnitt in schematischer Darstellung. Im seitlichen Schnitt sieht man zwei sich gegenüberstehende Leiterkarten 10, 110, die gegeneinander um die Achse A relativ zueinander beweglich sind.

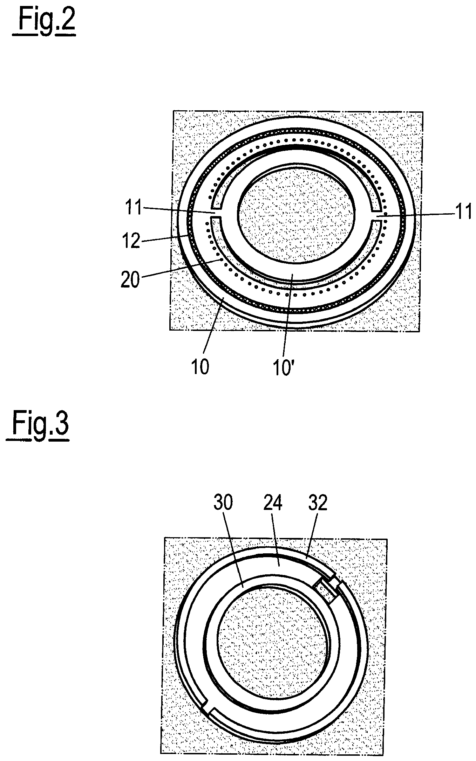

Fig. 2 zeigt insbesondere die Leiterkarte 10 in einer Blickrichtung, die in Fig. 1 von unten wäre. Man sieht also hier diejenige Seite der Leiterkarte 10, die der Leiterkarten 110 gegenübersteht.

Auf dem radial inneren Bereich 10' der Leiterkarte 10 befindet sich auf derjenigen Seite, die der Leiterkarte 110 gegenübersteht, eine Spule 14 mit Spulenwindungen, die im Wesentlichen konzentrisch zur Drehachse A der Relativbewegung sind. Diese Spulenwindungen sind im Schnitt der Fig. 1 schematisch als nur ein schwarzer Balken an der Unterseite des Leiterkartenabschnitts 10' gezeigt. In Fig. 2 ist die Spule auf der Leiterkarte in deren Bereich 10' nicht dargestellt. Die Spulenwindungen werden auf der jeweiligen Leiterkarte durch aufgedampfte oder geätzte Leiterbahnen gebildet. Für die Spule 14 auf der Leiterkarte 10 und die sie bildenden Spulenwindungen wird der einfachen Darstellung halber im vorliegenden Text dieselbe Bezugsziffer 14 verwendet.

Im äußeren Bereich der Leiterkarte 10 befindet sich auf derjenigen Seite, die der Leiterkarte 110 gegenübersteht, eine Elektrode 12, die konzentrisch zur Drehachse A als Leiterbahn ringförmig angeordnet ist. Man erkennt diese Elektrode 12 in Fig. 1 im Schnitt und in Fig. 2 in der Draufsicht.

In Fig. 1 nicht erkennbar, jedoch in Fig. 2 deutlich sichtbar ist, dass derjenige Leiterkartenbereich der Leiterkarte 10, auf dem die Elektrode 12 aufgebracht ist, und der Leiterkartenbereich 10', auf dem die Spule 14 aufgebracht ist, durch entsprechende radiale Stege 11 miteinander verbunden sind. Bei der beschriebenen Ausführungsform bilden also der Spulenträgerbereich 10' und der Elektrodenträger mit der Elektrode 12 eine einstückige Leiterkarte 10.

Die Leiterkarte 10 ist über einen oder mehrere isolierende Abstandshalter 16 (Fig. 1) mit einer metallischen Gehäuseschale 22 verbunden, die zum Beispiel ein Tiefziehblech umfassen kann. Bei der beschriebenen Ausführungsform ist diese Gehäuseschale 22 mit der Antriebswelle 52 eines Antriebsmotors 50 drehfest verbunden, so dass sich die Gehäuseschale 22 zusammen mit der Leiterkarte 10 und den darauf aufgebrachten Strukturen dreht.

In bzw. an der Leiterkarte 10 ist - bezüglich der Elektrode 12 radial nach innen versetzt - eine Abschirmungsstruktur 18, 20 vorgesehen, die bei der beschriebenen Ausführungsform wie folgt ausgestaltet ist:
In der Leiterkarte 10 befinden sich radial gegenüber der Elektrode 12 nach innen versetzt auf einem Ring angeordnete Bohrungen 20, deren Inneres metallisch ausgekleidet ist, z.B. durch einen entsprechenden Aufdampfprozess. Diese metallisch ausgekleideten Bohrungen 20 stehen über ein metallisches Material 18 mit der Gehäuseschale 22 in elektrischer Verbindung. Bei dem metallischen Material 18 kann es sich z.B. um leitenden Schaumstoff handeln.

Wie es in Fig. 1 sichtbar ist, weist die Gehäuseschale 22 an der radial äußeren Seite der Leiterkarte 10 einen abgewinkelten Bereich 26 auf. Insgesamt ergibt sich auf diese Weise eine Abschirmungsstruktur, die aus den metallisch ausgekleideten Bohrungen 20, der ringförmigen Materialstruktur 18, der planaren Fläche der Gehäuseschale 22 und dem abgewinkelten Bereich 26 der Gehäuseschale 22 gebildet wird.

An dem Antriebsmotor 50 ist bei der beschriebenen Ausgestaltung eine Gehäuseschale 122 fest montiert. Diese Gehäuseschale 122 trägt eine Struktur, die der beschriebenen Struktur, die in der Gehäuseschale 22 vorgesehen ist, entspricht und ihr gegenübersteht. So ist hier eine Elektrode 112 auf einem Leiterkartenbereich einer Leiterkarte 110 vorgesehen, der über einen oder mehrere isolierende Abstandshalter 116 mit der Gehäuseschale 122 verbunden ist. Eine ringförmige Struktur aus metallischem Schaumstoff 118 verbindet die Gehäuseschale 122 mit Bohrungen 120, die in der Leiterkarte 110 ringförmig angeordnet sind und metallisch ausgekleidet sind. Am radial äußersten Bereich der Gehäuseschale 122 weist diese einen abgewinkelten Bereich 126 auf.

Es ist erkennbar, dass die sich gegenüberstehenden Elektroden 12 bzw. 112 auf den sich gegenüberstehenden Leiterplatten 10 bzw. 110 effektiv durch die Abschirmungsstruktur abgeschirmt sind, die durch die Gehäuseschalen 22, 122, deren abgewinkelten Bereichen 26, 126, den Strukturen aus metallischem Schaumstoff 18, 118 und den metallisch ausgekleideten ringförmig angeordneten Bohrungen 20, 120 gebildet wird. Besonders effektiv ist die Abschirmung nach außen, wenn sich wie bei der gezeigten Ausführungsform die abgewinkelten Bereiche 26, 126 der beiden Gehäuseschalen 22, 122 überlappen.

Die Gehäuseschalen 22, 122 und insbesondere die abgewinkelten Bereiche 26, 126 bilden außerdem noch eine wirksame kapazitive Kopplung der Masse zwischen den sich relativ zueinander drehenden Elementen.

Radial innerhalb der Struktur mit den Elektroden 12 sind die bereits beschriebenen lithographisch hergestellten Spulenwindungen 14 auf dem Leiterkartenbereich 10' vorgesehen. Diesen Spulenwindungen 14 stehen auf der in Fig. 1 unteren Leiterkarte 110 in deren Bereich 110' Spulenwindungen 114 gegenüber, die genauso wie die Spulenwindungen 14 auf der jeweilige Leiterkarte lithographisch hergestellt sind. Für die Spule auf der Leiterkarte 110 und die sie bildenden Spulenwindungen wird der einfachen Darstellung halber im vorliegenden Text dieselbe Bezugsziffer 114 verwendet.

Der Leiterkartenbereich 10' wird von einer Ferritstruktur 24 umgeben, die in Fig. 3 isoliert gezeigt ist. Man sieht, dass diese Struktur abgewinkelte Bereiche 30, 32 aufweist, die die Leiterplatte 10' durchsetzen (Fig. 1). Dabei weist der äußere abgewinkelte Abschnitt 32 nur an den Bereichen Ausschnitte auf, durch die die Stegbereiche der Leiterkarte 10 hindurchgreifen, die den Leiterkartenbereich 10' mit der übrigen Leiterkarte verbinden.

Die Ferritstruktur 24 wirkt auf diese Weise besonders wirksam mit einer Ferritstruktur 124 an der anderen Leiterkarte 110 zusammen. Die zweite Ferritstruktur 124 umschließt dabei den Leiterkartenbereich 110' der zweiten Leiterkarte 110 in dergleichen Weise, wie die Ferritstruktur 24 den Leiterkartenbereich 10' der Leiterkarte 10. Auf die Weise wird die induktive Kopplung zwischen den sich gegenüberstehenden Spulen 14, 114 durch die Ferritstrukturen 24, 124 wirksam transformatorisch verstärkt. Außerdem wirken die Ferritstrukturen 24, 124 zusätzlich abschirmend in der Weise, dass die elektrische Kopplung der Elektroden 12, 112 zur Datenübertragung nicht oder weniger durch die induktive Kopplung zwischen den Spulen 14 und 114 gestört wird.

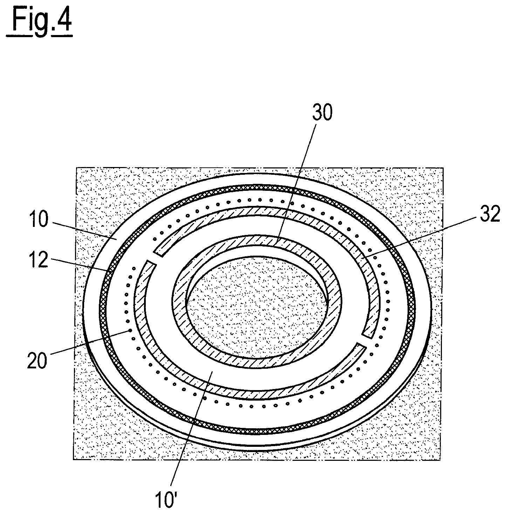

In Fig. 4 sieht man die Leiterkarte der Fig. 2 zusammen mit der Ferritstruktur der Fig. 3. Man sieht hier in derselben Perspektive auf die Leiterkarte 10 wie in Fig. 2. Durch die entsprechenden Aussparungen in der Leiterkarte 10 zwischen dem inneren Bereich 10' und dem äußeren Bereich der Leiterkarte ragt der abgewinkelte Bereich 32 der Ferritstruktur, die in Fig. 3 gezeigt ist. Radial innerhalb des Leiterkartenbereiches 10' befindet sich der abgewinkelte Bereich 30 der Ferritstruktur 24. In den Fig. 2 bis 4 ist jeweils diejenige Seite gezeigt, die der zweiten Leiterkarte 110 gegenübersteht, die dieselben Strukturen in derselben Anordnung aufweist.

Die sich relativ zueinander drehenden Strukturen umfassen also sich entsprechende gegenüberstehende Elemente, wobei in Fig. 1 die Elemente der zweiten Struktur die Bezugszeichen der ersten Struktur ("xx") mit einer vorgestellten 1 ("1 xx") wiederholt.

Im Betrieb bewegt sich die Antriebswelle 52 relativ zu dem Motor 50. Insofern bewegt sich die Gehäuseschale 22, die Leiterkarte 10, die Elektrode 12 und die Spulenwindungen 14 zusammen mit dem Ferritkern 24 um die Rotationsachse A. Diese Elemente bilden also den "Rotor", während die ortsfesten Elemente den "Stator" der Anordnung bilden. Ortsfest ist bei der beschriebenen Ausführungsform die Gehäuseschale 122 mit dem Motor 50 verbunden. Insofern bewegen sich auch die Leiterkarte 110 mit der Elektrode 112 und den Spulenwindungen 114 nicht. Es findet also eine Relativdrehbewegung zwischen den Spulenwindungen 14 und 114 statt, die eine induktive Kopplung zur Energieübertragung bereitstellen. Die sich gegenüberstehenden Elektroden 12 und 112 werden zur Datenübertragung zwischen den sich relativ um die Achse A drehenden Elementen verwendet.

Zum Beispiel kann der Antriebsmotor 50 mit der ortsfesten Gehäuseschale 122 an dem ortsfesten Teil eines Laserscanners vorgesehen sein, während sich die Gehäuseschale 22 mit den damit verbundenen Elementen zusammen mit der Antriebswelle 52 relativ dazu dreht.

Mit der Antriebswelle 52 kann dann z.B. der Sensorkopf des Laserscanners verbunden sein. Die erfindungsgemäße Vorrichtung ermöglicht dann auf wirksame Weise die Energieübertragung über die induktive Kopplung zwischen den Spulen 14 und 114 und die Datenübertragung von dem Sensorkopf zu den feststehenden Elementen des Laserscanners über die Elektroden 12 und 112.

Bei der Relativdrehbewegung der Elemente um die Rotationsachse A ist trotz der Rotationsbewegung sichergestellt, dass die Elektroden 12, 112 und die darüber stattfindende Datenübertragung wirksam gegen die Umgebung abgeschirmt ist, da die Elektroden 12, 112 auf allen Seiten von metallischem Material umschlossen sind, mit Ausnahme derjenigen Seite, die der jeweils anderen Leiterplatte gegenübersteht.

Bei der beschriebenen Ausführungsform ist die Datenübertragung über die Elektroden 12, 112 radial außerhalb der Energieübertragung über die Spulenwindungen 14, 114 beschrieben. Nicht gezeigt, aber ebenso möglich, ist eine Anordnung, bei der die induktive Energieübertragung über die Spulenwindungen 14, 114 radial außerhalb der Elektroden 12, 112 auf der Leiterkarte 10, 110 vorgesehen ist. Ansonsten und insbesondere hinsichtlich der Abschirmung zwischen den Datenübertragungselektroden und den Energieübertragungsspulen ist eine solche Anordnung analog zu der oben geschilderten.

### Bezugszeichenliste

- 10,110: Leiterplatte
- 10', 110': radial innerer Bereich der Leiterplatte
- 11: radialer Steg
- 12, 112: ringförmige Elektrode
- 14, 114: Spule, Spulenwindungen
- 16, 116: isolierender Abstandshalter
- 18, 118: ringförmige metallische Schaumstoffstruktur
- 20, 120: ringförmig angeordnete metallisch ausgekleidete Bohrungen
- 22, 122: Gehäuseschale
- 24, 124: Ferritstruktur
- 26, 126: abgewinkelter Bereich der Gehäuseschale
- 30, 130: radial innerer abgewinkelter Bereich der Ferritstruktur
- 32, 132: radial äußerer abgewinkelter Abschnitt der Ferritstruktur
- 50: Antriebsmotor
- 52: Antriebswelle
- A: Achse der relativen Rotationsbewegung

## Patentansprüche

1. Vorrichtung zur kontaktlosen Übertragung von Daten und Energie zwischen zwei sich um eine gemeinsame Rotationsachse (A) relativ zueinander bewegenden Gegenständen, wobei
a) an dem ersten Gegenstand eine erste Spule (14) vorgesehen ist,
b) an dem zweiten Gegenstand eine zweite Spule (114) vorgesehen ist, die der ersten Spule derart bezüglich der Rotationsachse (A) axial beabstandet gegenübersteht, dass eine Energieübertragung durch induktive Kopplung zwischen den zwei Spulen (14, 114) möglich ist,
c) koaxial und drehfest zu der ersten Spule (14) ein erster scheibenoder ringscheibenförmigen Elektrodenträger mit einem ersten elektrischen Leiter (12) vorgesehen ist,
d) koaxial und drehfest zu der zweiten Spule (114) ein dem ersten Elektrodenträger gegenüberstehender zweiter scheiben- oder ringscheibenförmigen Elektrodenträger mit einem zweiten elektrischen Leiter (112) vorgesehen ist, wobei sich der erste und der zweite Elektrodenträger derart bezüglich der Rotationsachse (A) axial beabstandet gegenüberstehen und der erste und der zweite elektrische Leiter (12, 112) derart angeordnet sind, dass eine Datenübertragung durch elektrische Kopplung zwischen dem ersten und dem zweiten Leiter (12, 112) möglich ist,
e) die elektrischen Leiter (12, 112) kreisförmig oder teilkreisförmig sind, wobei die Kreise oder Teilkreise konzentrisch zur Rotationsachse (A) der Relativbewegung der Gegenstände sind,
f) einerseits die Spulenwindungen der ersten Spule (14) und der erste elektrische Leiter (12) konzentrisch zueinander angeordnet sind und andererseits die Spulenwindungen der zweiten Spule (114) und der zweite elektrische Leiter (112) konzentrisch zueinander angeordnet sind,
g) der erste Gegenstand einen ersten scheiben- oder ringscheibenförmigen Spulenträger umfasst, der die erste Spule trägt, und der zweite Gegenstand einen zweiten scheiben- oder ringscheibenförmigen Spulenträger umfasst, der die zweite Spule trägt, wobei der erste Spulenträger und der erste Elektrodenträger einstückig sind und von einer ersten Leiterkarte (10) gebildet werden und der zweite Spulenträger und der zweite Elektrodenträger einstückig sind und von einer zweiten Leiterkarte (110) gebildet werden,
**dadurch gekennzeichnet, dass**
im radialen Bereich zwischen der ersten Spule (14) und dem ersten elektrischen Leiter (12) und/oder im radialen Bereich zwischen der zweiten Spule (114) und dem zweiten elektrischen Leiter (112), jeweils koaxial zwischen Spule und Leiter, eine Anordnung aus leitfähigem Material (18, 20; 118, 120) zur elektrischen Abschirmung vorgesehen ist, wobei die Anordnung zur elektrischen Abschirmung Bohrungen (20; 120) in der Leiterkarte (10; 110) im radialen Bereich zwischen der Spule (14; 114) und dem elektrischen Leiter (12; 112) umfasst, in denen sich leitfähiges Material befindet.

2. Vorrichtung nach Anspruch 1, **dadurch gekennzeichnet, dass** die Spulenwindungen der ersten Spule (14) flächig auf der ersten Leiterkarte (10) aufgebracht sind und die Spulenwindungen der zweiten Spule (114) flächig auf der zweiten Leiterkarte (110) aufgebracht sind.

3. Vorrichtung nach einem der vorhergehenden Ansprüche, **gekennzeichnet durch** eine erste Gehäuseschale (22) aus leitfähigem Material, die drehfest mit dem ersten Gegenstand ist, und/oder eine zweite Gehäuseschale (122) aus leitfähigem Material, die drehfest mit dem zweiten Gegenstand ist.

4. Vorrichtung nach Anspruch 3, **dadurch gekennzeichnet, dass** die erste Gehäuseschale (22) elektrisch mit der Anordnung (18, 20) aus leitfähigem Material zur elektrischen Abschirmung zwischen der ersten Spule (14) und dem ersten elektrischen Leiter (12) verbunden ist und die zweite Gehäuseschale (122) elektrisch mit der Anordnung (118, 120) aus leitfähigem Material zur elektrischen Abschirmung zwischen der zweiten Spule (114) und dem zweiten elektrischen Leiter (112) verbunden ist.

5. Vorrichtung nach Anspruch 4, **dadurch gekennzeichnet, dass** die Anordnung aus leitfähigem Material im radialen Bereich zwischen der jeweiligen Spule und der jeweiligen Elektrode eine ringförmige Struktur (18; 118) umfasst, die koaxial zur Drehachse (A) zwischen der jeweiligen Spule (14; 114) und der jeweiligen Elektrode (12; 112) angeordnet ist und mit der jeweiligen Gehäuseschale (22; 122) elektrisch leitend verbunden ist.

6. Vorrichtung nach einem der Ansprüche 3 bis 5, **dadurch gekennzeichnet, dass** die beiden Gehäuseschalen (22; 122) jeweils zumindest einen scheibenförmigen, senkrecht zur Drehachse ausgerichteten Bereich und einen radial außen davon befindlichen abgewinkelten Bereich (26; 126) umfassen, wobei die abgewinkelten Bereiche (26; 126) der beiden Gehäuseschalen (22; 122) radial beabstandet zueinander nebeneinander liegen.

7. Vorrichtung nach einem der vorhergehenden Ansprüche, **gekennzeichnet durch** eine erste Anordnung (24) aus magnetischem Material, insbesondere aus Ferrit, die die erste Spule (14) an ihrem radial äußeren Umfang umgibt und/oder in ihrem radial Inneren angeordnet ist.

8. Vorrichtung nach Anspruch 7, **gekennzeichnet durch** eine zweite Anordnung (124) aus magnetischem Material, insbesondere aus Ferrit, die zweite Spule (114) zumindest an ihrem radial äußeren Umfang umgibt und/oder in ihrem radial Inneren angeordnet ist und in transformatorischer Wirkung mit der ersten Anordnung (24) aus magnetischem Material zusammenwirkt.

9. Vorrichtung nach wenigstens einem der Ansprüche 7 oder 8, **dadurch gekennzeichnet, dass** die Anordnung aus magnetischem Material wenigstens einen Abschnitt (30, 32; 130, 132) aufweist, der den Spulenträger durchsetzt.

10. Vorrichtung nach wenigstens einem der vorhergehenden Ansprüche, **dadurch gekennzeichnet, dass** ein Antriebsmotor (50) oder ein Antriebselement (52) eines Antriebsmotors zur Erzeugung der Relativbewegung der zwei Gegenstände die Spulenträger durchsetzt.

11. Laserscanner mit einer Vorrichtung nach einem der vorhergehenden Ansprüche zur Übertragung von Energie und Daten zwischen einer den ersten Gegenstand bildenden Versorgungseinheit und einem relativ dazu um eine Rotationsachse (A) drehbaren, den zweiten Gegenstand bildenden Sensorkopf.

## Claims

1. An apparatus for the contactless transmission of data and energy between two objects moving relative to one another about a common axis of rotation (A), wherein
a) a first coil (14) is provided at the first object;
b) a second coil (114) is provided at the second object and is disposed opposite and axially spaced apart from the first coil with respect to the axis of rotation (A) such that an energy transmission between the two coils (14, 114) is possible by inductive coupling;
c) a first disk-shaped or annular disk-shaped electrode carrier having a first electrical conductor (12) is provided coaxially to and rotationally fixed with respect to the first coil (14);
d) a second disk-shaped or annular disk-shaped electrode carrier disposed opposite the first electrode carrier and having a second electrical conductor (112) is provided coaxially to and rotationally fixed with respect to the second coil (114), wherein the first and second electrode carriers are disposed opposite and axially spaced apart with respect to the axis of rotation (A) such that and the first and second electrical conductors (12, 112) are arranged such that a data transmission is possible between the first and second conductors (12, 112) by electrical coupling;
e) the electrical conductors (12, 112) are circular or part-circular, with the circles or part-circles being concentric to the axis of rotation (A) of the relative movement of the objects;
f) on the one hand, the coil windings of the first coil (14) and the first electrical conductor (12) are arranged concentric to one another and, on the other hand, the coil windings of the second coil (114) and the second electrical conductor (112) are arranged concentric to one another; and
g) the first object comprises a first disk-shaped or annular disk-shaped coil carrier which bears the first coil and the second object comprises a second disk-shaped or annular disk-shaped coil carrier which bears the second coil, wherein the first coil carrier and the first electrode carrier are in one piece and are formed by a first circuit board (10), and the second coil carrier and the second electrode carrier are in one piece and are formed by a second circuit board (110),
**characterized in that**
an arrangement of conductive material (18, 20; 118, 120) for the electrical shielding is provided in the radial region between the first coil (14) and the first electrical conductor (12) and/or in the radial region between the second coil (114) and the second electrical conductor (112), in each case coaxially between the coil and the conductor, with the arrangement for the electrical shielding comprising bores (20; 120) in the circuit board (10; 110) in the radial region between the coil (14; 114) and the electrical conductor (12; 112), in which bores conductive material is located.

2. An apparatus in accordance with claim 1, **characterized in that** the coil windings of the first coil (14) are applied in a two-dimensional manner to the first circuit board (10) and the coil windings of the second coil (114) are applied in a two-dimensional manner to the second circuit board (110).

3. An apparatus in accordance with one of the preceding claims, **characterized by** a first housing shell (22) of conductive material which is rotationally fixed to the first object; and/or by a second housing shell (122) of conductive material which is rotationally fixed to the second object.

4. An apparatus in accordance with claim 3, **characterized in that** the first housing shell (22) is electrically connected to the arrangement (18, 20) of conductive material for the electrical shielding between the first coil (14) and the first electrical conductor (12) and the second housing shell (122) is electrically connected to the arrangement (118, 120) of conductive material for the electrical shielding between the second coil (114) and the second electrical conductor (112).

5. An apparatus in accordance with claim 4, **characterized in that** the arrangement of conductive material comprises an annular structure (18; 118) in the radial region between the respective coil and the respective electrode, said annular structure being arranged coaxially to the axis of rotation (A) between the respective coil (14; 114) and the respective electrode (12; 112) and being electrically conductively connected to the respective housing shell (22; 122).

6. An apparatus in accordance with any one of the claims 3 to 5, **characterized in that** the two housing shells (22; 122) each comprise at least one disk-shaped region aligned perpendicular to the axis of rotation and one angled region (26; 126) located radially outwardly therefrom, with the angled regions (26; 126) of the two housing shells (22; 122) being disposed radially spaced apart and next to one another.

7. An apparatus in accordance with any one of the preceding claims, **characterized by** a first arrangement (24) of magnetic material, in particular of ferrite, which surrounds the first coil (14) at its radially outer periphery and/or which is arranged in its radial interior.

8. An apparatus in accordance with claim 7, **characterized by** a second arrangement (124) of magnetic material, in particular of ferrite, which at least surrounds the second coil (114) at its radially outer periphery and/or is arranged in its radial interior and cooperates in a transformatory manner with the first arrangement (24) of magnetic material.

9. An apparatus in accordance with at least one of the claims 7 or 8, **characterized in that** the arrangement of magnetic material has at least one section (30, 32; 130, 132) which passes through the coil carrier.

10. An apparatus in accordance with at least one of the preceding claims, **characterized in that** a drive motor (50) or a drive element (52) of a drive motor passes through the coil carriers to generate the relative movement of the two objects.

11. A laser scanner having an apparatus in accordance with any one of the preceding claims for the transmission of energy and data between a supply unit forming the first object and a sensor head rotatable relative thereto about an axis of rotation (A) and forming the second object.

## Revendications

1. Dispositif pour la transmission sans contact de données et d'énergie entre deux objets en mouvement l'un par rapport à l'autre autour d'un axe de rotation commun (A), dans lequel
a) il est prévu une première bobine (14) sur le premier objet,
b) il est prévu une seconde bobine (114) sur le second objet, qui se trouve à l'opposé de la première bobine à distance axiale par rapport à l'axe de rotation (4) de telle façon qu'une transmission d'énergie par couplage inductif entre les deux bobines (14, 114) est possible,
c) il est prévu un premier support d'électrodes, en forme de disque ou en forme de disque annulaire, coaxialement et solidairement en rotation par rapport à la première bobine (14), avec un premier conducteur électrique (12),
d) il est prévu un second support d'électrodes, en forme de disque ou en forme de disque annulaire, coaxialement et solidairement en rotation par rapport à la seconde bobine (114) à l'opposé du premier support d'électrodes, avec un second conducteur électrique (112), de sorte que le premier et le second support d'électrodes sont opposés l'un à l'autre et à distance axiale par rapport à l'axe de rotation (A) de telle façon, et le premier et le second conducteur électrique (12, 112) sont agencés de telle manière, qu'une transmission de données par couplage électrique entre le premier et le second conducteur (12, 112) est possible,
e) les conducteurs électriques (12, 112) sont sous forme circulaire ou sous forme circulaire partielle, de sorte que les cercles ou les cercles partiels sont concentriques à l'axe de rotation (A) du mouvement relatif des objets,
f) les spires de la première bobine (14) et le premier conducteur électrique (12) sont agencés concentriquement les unes par rapport à l'autre d'une part et les spires de la seconde bobine (114) et le second conducteur électrique (112) sont agencés concentriquement les unes par rapport à l'autre d'autre part,
g) le premier objet inclut un porte-bobine en forme de disque ou en forme de disque annulaire, qui porte la première bobine, et le second objet inclut un second porte-bobine en forme de disque ou en forme de disque annulaire, qui porte la seconde bobine, de sorte que le premier porte-bobine et le premier porte-électrodes sont d'une seule pièce et sont formés par une première carte à circuits (10), et le second porte-bobine et le second porte-électrodes sont d'une seule pièce et sont formés par une seconde carte à circuits (110),
**caractérisé en ce que**
dans la région radiale entre la première bobine (14) et le premier conducteur électrique (12) et/ou dans la région radiale entre la seconde bobine (114) et le second conducteur électrique (112) et respectivement coaxialement entre bobine et conducteur, il est prévu un agencement d'un matériau conducteur (18, 20 ; 118, 120) pour le blindage électrique, et l'agencement pour le blindage électrique inclut des perçages (20 ; 120) dans les cartes à circuits (10 ; 110) dans la région radiale entre la bobine (14 ; 114) et le conducteur électrique (12 ; 112), perçages dans lesquels se trouve un matériau conducteur.

2. Dispositif selon la revendication 1, **caractérisé en ce que** les spires de la première bobine (14) sont appliquées à plat sur la première carte à circuits (10) et les spires de la seconde bobine (114) sont appliquées à plat sur la seconde carte à circuits (110).

3. Dispositif selon l'une des revendications précédentes, **caractérisé par** une première coque de boîtier (22) en matériau conducteur, qui est solidaire en rotation avec le premier objet, et/ou une seconde coque de boîtier (122) en matériau conducteur, qui est solidaire en rotation avec le second objet.

4. Dispositif selon la revendication 3, **caractérisé en ce que** la première coque de boîtier (22) est reliée électriquement avec l'agencement (18, 20) en matériau conducteur pour le blindage électrique entre la première bobine (14) et le premier conducteur électrique (12), et la seconde coque de boîtier (122) est reliée électriquement avec l'agencement (118, 120) en matériau conducteur pour le blindage électrique entre la seconde bobine (114) et le second conducteur électrique (112).

5. Dispositif selon la revendication 4, **caractérisé en ce que** l'agencement en matériau conducteur inclut une structure de forme annulaire (18 ; 118) dans la zone radiale entre la bobine respective et l'électrode respective, qui est agencée coaxialement à l'axe de rotation (A) entre la bobine respective (14 ; 114) et l'électrode respective (12 ; 112), et qui est reliée avec la coque de boîtier (22 ; 122) respective de manière à conduire l'électricité.

6. Dispositif selon l'une des revendications 3 à 5, **caractérisé en ce que** les deux coques de boîtier (22 ; 122) incluent respectivement au moins une zone en forme de disque orientée perpendiculairement à l'axe de rotation et une zone en équerre (26 ; 126) qui se trouve radialement à l'extérieur par rapport à la première, et les zones en équerre (26 ; 126) des deux coques de boîtier (22 ; 122) sont situées l'une à côté de l'autre et écartées radialement l'une de l'autre.

7. Dispositif selon l'une des revendications précédentes, **caractérisé par** un premier agencement (24) en matériau magnétique, en particulier en ferrite, qui entoure la première bobine (14) à sa périphérie radialement extérieure et/ou qui est agencé radialement à l'intérieur de celle-ci.

8. Dispositif selon la revendication 7, **caractérisé par** un second agencement (124) en matériau magnétique, en particulier en ferrite, qui entoure la seconde bobine (114) au moins à sa périphérie radialement extérieure et/ou qui est agencé radialement à l'intérieur de celle-ci, et qui coopère avec le premier agencement (24) en matériau magnétique en formant un transformateur.

9. Dispositif selon l'une au moins des revendications 7 ou 8, **caractérisé en ce que** l'agencement en matériau magnétique comprend au moins une portion (30, 32 ; 130, 132) qui traverse le porte-bobine.

10. Dispositif selon l'une au moins des revendications précédentes, **caractérisé en ce qu'**un moteur d'entraînement (50) ou un élément d'entraînement (52) d'un moteur d'entraînement destiné à engendrer le mouvement relatif des deux objets traverse le porte-bobine.

11. Scanner à laser comprenant un dispositif selon l'une des revendications précédentes pour la transmission d'énergie et de données entre une unité d'alimentation formant le premier objet et une tête de capteur en rotation par rapport à celle-ci autour d'un axe de rotation (A), qui forme le second objet.
